# EUROPÄISCHE PATENTSCHRIFT

(11) **EP 1 318 483 B1**
(45) Veröffentlichungstag und Bekanntmachung des Hinweises auf die Patenterteilung: **25.02.2009**
(21) Anmeldenummer: 02023580.0
(22) Anmeldetag: 23.10.2002
(51) Int. Cl.: G07C 9/00

(54) **Verfahren zur Erkennung einer Weiterleitung bei einer kontaktlosen Datenübertragung**
Method for recognizing a forwarding in a contactless data transmission
Procédé pour la reconnaissance d'un transfert dans une transmission de données sans contact

(30) Priorität: 05.12.2001 DE 10159604
(43) Veröffentlichungstag der Anmeldung: 11.06.2003
(73) Patentinhaber: ATMEL Germany GmbH, 74072 Heilbronn (DE)
(72) Erfinder: Blatz, Werner, Dipl.-Ing.(FB), 74211 Leingarten (DE); Moser, Helmut, Dipl.-Ing.(FB), 74078 Heilbronn (DE)

(56) Entgegenhaltungen:
- EP-A- 0 983 916
- DE-A- 19 718 423
- US-A- 5 499 022
- US-A1- 2001 033 222
- US-B1- 6 218 932

## Beschreibung

Die vorliegende Erfindung betrifft ein Verfahren zur Erkennung einer Weiterleitung bei einer kontaktlosen Datenübertragung, gemäß dem Oberbegriff des Patentanspruchs 1.

Ein derartiges Verfahren ist aus der Druckschrift DE 10106736.4 bekannt. Hierbei wird mittels eines Vergleichs der Dämpfungscharakteristik der Übertragungsstrecke von "uplink" und "downlink" zwischen einer ersten Sende- und Empfangseinheit und einer zweiten Sende- und Empfangseinheit festgestellt, ob eine Weiterleitung stattfindet. Hierzu wird in der zweiten Sende- und Empfangseinheit der Amplitudenwert des Fragesignals vermessen und an die erste Sende- und Empfangseinheit zurückgesendet. In der ersten Sende- und Empfangseinheit wird der zurückgesendete Wert der Amplitude mit dem Wert der Amplitude des empfangenen Antwortsignals verglichen. Nachteil des Verfahrens ist es, dass eine Weiterleitung mittels eines sogenannten Transceivers nur unzureichend erschwert wird.

Ein weiteres gattungsbildendes Verfahren ist aus der Druckschrift DE 10005503 bekannt. Hierbei wird eine physikalische Signalgrösse der elektromagnetischen Welle reversibel geändert. Hierzu wird in einer zweiten Sende- und Empfangseinheit (Transponder), ein gegenüber dem Fragesignal beispielsweise in der Frequenz verändertes Antwortsignal, an die erste Sende- und Empfangseinheit zurückgesandt. In der ersten Sende- und Empfangseinheit (Basisstation) wird die Frequenz des Antwortsignals zurückgeändert und mit der Frequenz des ursprünglich ausgesandten Fragesignals verglichen. Liegt der ermittelte Wert innerhalb eines vorgegebenen Intervalls kann eine Weiterleitung weitestgehend ausgeschlossen werden.

Ein weiteres Verfahren der gattungsbildenden Art ist aus DE 10019277.7 bekannt. Hierbei wird mittels eines Vergleichs der Laufzeit zwischen dem Frage- und Antwortsignal mit vorgegebenen Werten eine Weiterleitung erkannt, sofern der gemessene Wert der Laufzeit nicht mit einem vorgegebenen Wert der Laufzeit übereinstimmt.

Ein weiteres Verfahren ist aus der US 2001/00332222 A1 bekannt. Hierbei wird eine Authentifizierung so vorgenommen, dass zeitlich sequentiell ausgesendete elektromagnetische Felder von unterschiedlichen Antennen einer Empfangseinrichtung durch Bildung von Verhältnissen zur Bestimmung einer Orientierung und einer Position der Empfangseinrichtung herangezogen werden. Die dadurch gewonnenen Orientierungsinformationen werden anschließend an eine Sendeeinheit zurück übertragen, wobei das zur Rückübertragung verwendete Signal durch mehrere UHF-Receiver der Sendeeinheit empfangen wird und zur Berechnung eines zweiten Positionssignals herangezogen wird. Nur wenn sich die von der Empfangseinheit und die von der Sendeeinheit ermittelten Positionssignale nicht über eine Toleranz hinaus unterscheiden wird der vorgenommene Frage-Antwort-Ablauf als korrekt betrachtet und eine positive Authentifizierung angenommen_{.}

Systeme zur kontaktlosen Datenübertragung werden vorzugsweise bei Identifikationssystemen eingesetzt. Im Allgemeinen bestehen diese Systeme aus einer ersten Sende- und Empfangseinheit, einer sogenannten "Basisstation" und einer zweiten Sende- und Empfangseinheit, einem sogenannten "Transponder". Im KFZ-Bereich, einem Haupteinsatzgebiet werden derartige Systeme für eine Authentifizierung eingesetzt. Um eine hohe Sicherheit bei der Authentifizierung zu erreichen, wird die Kommunikationsentfernung bei dem sogenannten "passiv entry", d.h. das Öffnen eines Fahrzeugs durch ein Ziehen am Türgriff auf wenige Meter beschränkt. Ferner werden Verfahren entwickelt, die eine unberechtigte Authentifizierung, insbesondere durch eine Weiterleitung verhindern, und den Authentifizierungsprozess abbrechen. Aufgabe der vorliegenden Erfindung ist es, ein Verfahren anzugeben, das eine Weiterleitung der Signale zuverlässig erkennt.

Die genannte Aufgabe wird durch die Merkmale des Patentanspruches 1 gelöst. Günstige Ausgestaltungsformen sind Gegenstand von Unteransprüchen.

Das Wesen der Erfindung besteht darin, dass bei einer kontaktlosen Datenübertragung durch einen Vergleich von vorgegebener und gemessener Empfangsfeldstärke eine Weiterleitung wesentlich erschwert wird. Hierzu wird zwischen einer ersten Sende- und Empfangseinheit und einer zweiten Empfangseinheit, bei der von der ersten Sende- und Empfangseinheit ein elektromagnetisches Feld mittels wenigstens zwei räumlich getrennten Antennen in einer sequentiellen Reihenfolge ausgesendet wird, von der zweiten Empfangseinheit die Feldstärkewerte des empfangenen elektromagnetischen Feldes bestimmt und die ermittelten Feldstärkewerte der jeweiligen Antenne mit einem vorgegebenen Wert aus einem Wertefeld verglichen und eine Weiterleitung erkannt, sofern die Feldstärkewerte außerhalb eines durch das Wertefeld gegebenen Bereiches liegen.

Ein Vorteil des Verfahrens besteht darin, dass sich von einem Weiterleitungsgerät die Sendecharakteristik von zwei voneinander räumlich getrennten Antennen nur mit großem Aufwand nachbilden lässt und dadurch eine Weiterleitung mit hoher Sicherheit erkannt wird. Hierbei ist es für das Weiterleitungsgerät umso schwieriger die Sendecharakteristik nachzubilden, je weiter die Antennen räumlich voneinander getrennt sind und je stärker das von der jeweiligen Antenne ausgesandte Feld von der Kugelform abweicht. Ferner wird die Nachbildung der Sendecharakteristik durch das Weiterleitungsgerät zusätzlich erschwert, wenn mehr als zwei räumlich voneinander getrennte Sendeantennen verwendet werden. Um eine Überlagerung der Felder der Sendeantennen zu vermeiden, werden zur Aussendung des elektromagnetischen Feldes die Sendeantennen von der ersten Sende- und Empfangseinheit in einer sequentiellen Reihenfolge angesteuert. Hierdurch lässt sich von der zweiten Empfangseinheit die Feldstärke des von der jeweiligen Antenne ausgesendeten Feldes sequentiell bestimmen. Um den Vergleich der von der Empfangsantenne bestimmten Feldstärkewerte schnell und einfach durchzuführen, ist es vorteilhaft, die elektromagnetische Feldverteilung um die jeweilige Sendeantenne in Abhängigkeit der Entfernung für die Sendefrequenz zu bestimmen und die Werte in Form eines Wertefeldes abzuspeichern. Die Dimensionalität des Wertefeldes hängt dabei von der Anzahl der Sendeantennen ab und ist bei zwei Sendeantennen mindestens zweidimensional. Durch eine Vorgabe von minimaler und maximaler Feldstärke innerhalb des Wertefeldes, läßt sich ein zulässiger Werte- bzw. Kommunikationsbereich vorgeben. Des Weiteren läßt sich mittels einer Streubreite um die jeweiligen Feldstärkewerte des Wertefeldes, die Funktionssicherheit des Verfahrens insbesondere bei einer Schwankung der Dämpfungscharakteristik, erhöhen. Ferner ist es vorteilhaft, daß sich mit dem Verfahren eine Weiterleitung des elektromagnetischen Feldes unabhängig von der Sendefrequenz d.h. sowohl im Nahfeld als auch im Fernfeld der Sendeantenne, detektieren läßt.

In einer Weiterbildung des Verfahrens wird in der zweiten Empfangseinheit die Feldstärkebestimmung des empfangenen elektromagnetischen Feldes mittels drei Antennen durchgeführt, wobei die jeweiligen Antennen zueinander orthogonal stehen. Um die Bestimmung der einzelnen Komponenten der Feldstärke bzw. des sogenannten Feldstärkevektors gleichzeitig durchzuführen, ist vorteilhaft, wenn jede Empfangsantenne einen Eingangskanal aufweist, in dem die jeweilige Komponente des Feldstärkevektors bestimmt wird. Hierdurch läßt sich die bei der sequentiellen Bestimmung der einzelnen Komponenten des Feldstärkevektors auftretende Kopplung zwischen den einzelnen Komponenten, die durch eine Lageänderung der Antennen während der Bestimmung hervorgerufen wird, unterdrücken. Ferner läßt sich auch bei drei orthogonal stehenden Antennen eine platzsparende Bauform erzielen, indem zwei der orthogonal stehenden Antennen in der Ebene der dritten Antenne angeordnet werden. Insbesondere im Nahfeld des elektromagnetischen Feldes läßt sich dies mittels zwei stabförmigen Antennen, die in der Ebene der dritten ringförmig ausgeformten Antenne angeordnet sind, durchführen. Untersuchungen der Anmelderin haben gezeigt, daß es besonders vorteilhaft ist, wenn zur Erkennung der Weiterleitung aus den einzelnen Komponenten des Feldstärkevektors der Betrag des empfangenen Feldes bestimmt und nachfolgend ein Vergleich die Wertepaare der Beträge mit den Wertepaaren in dem Wertefeld durchgeführt wird. Des Weiteren ist es vorteilhaft, aus den unterschiedlichen Feldstärkevektoren den Empfangswinkel zwischen zwei Sendeantennen zu bestimmen und mit einem vorgegebenen Winkel zu vergleichen. Hierbei ist jeder Winkelwert mit wenigstens einem Wertepaar der Feldstärkevektoren verknüpft. Sofern der bestimmte Empfangswinkel innerhalb eines vorgegebenen Intervalls um den vorgegebenen Wert des Wertefeldes liegt, wird eine Weiterleitung ausgeschlossen. Durch die Kombination des Vergleiches von den Werten der Feldstärkevektoren bzw. ihren Betragswerten mit den Werten der Empfangswinkel wird die Zuverlässigkeit des Verfahrens erhöht.

In einer anderen Weiterbildung ist es vorteilhaft, die Ergebnisse der Wertevergleiche zu speichern, um beispielsweise die Streubreiten der Feldstärkenbestimmung zu ermitteln. Insbesondere lassen sich mittels der Speicherung statistische Informationen über eine zeitlich längerfristige Veränderung der Sende- bzw. der Empfangscharakteristik gewinnen. Das Auslesen der Informationen läßt sich beispielsweise bei einem Kraftfahrzeug während den Serviceintervallen durchführen.

In einer Weiterbildung wird, bei einer Kommunikation im elektromagnetischen Nahfeld eine Bestimmung des magnetischen Anteils der Feldstärke durchgeführt. Besonders vorteilhaft ist es, daß sich der Empfang mittels besonders platzsparenden induktiv wirkenden Antennen durchführen läßt. Insbesondere bei niederfrequenten Sendesignalen im Bereich von 125 kHz wird durch eine Blechkarosserie des Kraftfahrzeuges das magnetische Feld von innenliegenden Sendeantennen im Außenraum stark deformiert. Eine Nachbildung der Sendecharakteristik ist hierdurch mit einem vertretbaren Aufwand nicht durchführbar und eine Weiterleitung wird mit großer Sicherheit erkannt. Ferner ist es vorteilhaft, den Wertevergleich zu Beginn der Datenübertragung durchzuführen und die Datenübertragung zu beginnen, sofern keine Weiterleitung detektiert wird. Des Weiteren ist es vorteilhaft, den Wertevergleich mehrfach während der Datenübertragung durchzuführen und hierdurch die Sicherheit bei zeitlich langen Datenübertragungen zu erhöhen. Untersuchungen der Anmelderin haben gezeigt, daß es insbesondere bei hohen Datenmengen vorteilhaft ist, die Bestimmung der Feldstärke an modulierten elektromagnetischen Feldern durchzuführen. Hierzu wird das elektromagnetische Feld vorzugsweise mittels einer Phasen- oder Frequenzmodulation moduliert und die Bestimmung und der Vergleich der Feldstärkewerte beispielsweise während eine Identifikationsroutine durchgeführt. Sofern keine Weiterleitung detektiert wird, sind die während des Feldstärkevergleichs ausgewerteten Daten gültig.

In einer anderen Weiterbildung des Verfahrens ist es insbesondere bei einer unidirektionalen Datenübertragung vorteilhaft, den Wertevergleich innerhalb des Empfängers durchzuführen. Hierzu wird der Wertebereich in dem Empfänger in einer Speichereinheit abgelegt. Da ein Zurücksenden der bestimmten Feldstärkewerte an die erste Sende- und Empfangseinheit entfällt, wird die Kommunikationszeit verkürzt.

In einer Weiterbildung des Verfahrens ist es insbesondere bei einer bidirektionalen Datenübertragung vorteilhaft, die Feldstärkewerte und oder das Ergebnis des Vergleichs der Feldstärkewerte durch eine Sendeeinheit an die erste Sende- und Empfangseinheit zurückzusenden. Hierdurch läßt sich die Bestimmung und oder der Vergleich der Feldstärkewerte in der ersten Sende- und Empfangseinheit durchführen und den Schaltungsaufwand und den Stromverbrauch in der zweiten Sende- und oder Empfangseinheit reduzieren.

Das erfindungsgemäße Verfahren soll nachfolgend anhand von Ausführungsbeispielen im Zusammenhang mit den Zeichnungen erläutert werden. Es zeigen, die
- Fig. 1: ein Ausführungsbeispiel der Erfindung mit zwei räumlich getrennten Antennen, und
- Fig. 2: ein Ausführungsbeispiel der Erfindung mit drei räumlich getrennten Antennen am Beispiel eines Kraftfahrzeuges.

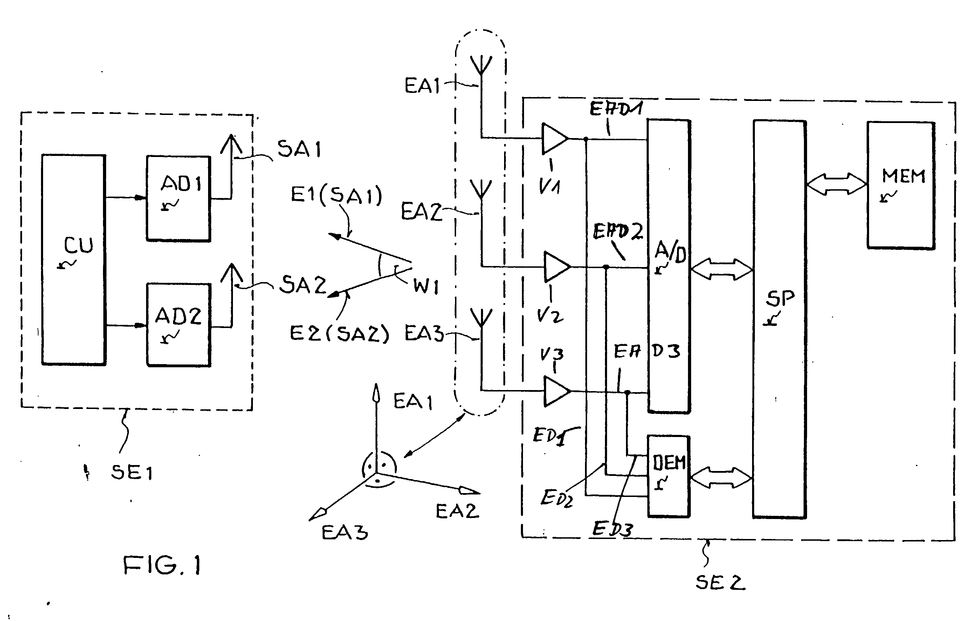

Die Aufgabe des in Figur 1 abgebildeten Ausführungsbeispiels ist es, während eines Datenaustausches mittels eines modulierten elektromagnetischen Feldes zwischen einer ersten Sende- und Empfangseinheit SE1 und einer zweiten Empfangseinheit SE2 durch einen Vergleich zwischen den in der zweiten Empfangseinheit SE2 bestimmten Feldstärkewerten mit vorgegebenen Werten, eine Weiterleitung zu erkennen.
Im Folgenden wird die dargestellte Anordnung näher erläutert. Die erste Sende- und Empfangseinheit SE1 enthält eine Steuereinheit CU, die mit einem ersten Ausgangstreiber AD1 und einem zweiten Ausgangstreiber AD2 verschaltet ist. Ferner ist mit dem ersten Ausgangstreiber AD1 eine erste Sendeantenne SA1 und mit dem zweiten Ausgangstreiber AD2 eine zweite Sendeantenne SA2 verschaltet. Die zweite Empfangseinheit SE2 enthält drei zueinander orthogonal stehende Antennen EA1, EA2, und EA3, wobei jeder Antenne EA1, EA2 und EA3 ein eigener Eingangskanal zugeordnet ist, indem die Empfangsantennen EA1, EA2, und EA3 mittels eines Signalverstärkers V1, V2 und V3 mit einem Eingang EAD1, EAD2, und EAD3 eines A/D-Wandlers AD1 verschaltet ist. Ferner ist jeder Eingang EAD1, EAD2 und EAD3 des A/D-Wandlers AD1 mit einem Eingang ED1, ED2 und ED3 eines Demodulators DEM verschaltet. Ferner ist der A/D-Wandler AD1 und der Demodulator DEM mit einem Signalprozessor SP verschaltet. Des Weiteren ist der Signalprozessor SP mit einer Speichereinheit MEM verbunden.
Im Folgenden wird die Funktionsweise der Anordnung erläutert. Die erste Sende- und Empfangseinheit SE1 sendet ein elektromagnetisches Feld mittels der ersten Sendeantenne SA1 und nachfolgend ein elektromagnetisches Feld über die zweite Sendeantenne SA2 aus, wobei die Amplitude des über die erste Sendeantenne SA1 ausgesendeten elektromagnetischen Feldes E1(SA1) vorzugsweise der Amplitude des mittels der zweiten Sendeantenne SA2 ausgesendeten elektromagnetischen Feldes E2(SA2) entspricht. Nachfolgend wird mittels den drei Empfangsantennen EA1, EA2, und EA3 der Empfangseinheit SE2 die Komponenten der Feldstärke des von der ersten Sendeantenne empfangenen Feldes bestimmt, indem mittels den drei Eingangskanälen die einzelnen Komponenten des Feldstärkevektors E1 mittels eines A/D-Wandler AD1 dem Signalprozessor SP zugeführt werden. Nachfolgend wird der Feldstärkevektor E2 für das von der zweiten Sendeantenne SA2 ausgesendete elektromagnetische Feld E2(SA2) von dem Signalprozessor SP bestimmt. Der Signalprozessor SP2 vergleicht die beiden Betragswerte der Feldstärkevektoren E1 und E2 mit den in der Speichereinheit MEM abgelegten Wertepaaren. Ferner wird von dem Signalprozessor SP aus den beiden Feldstärkevektoren E1 und E2 ein Empfangswinkel W1 berechnet und mit dem in der Speichereinheit MEM abgelegten Wert für den Empfangswinkel verglichen. Stimmen sowohl die Feldstärkewerte als auch der Wert des Empfangswinkel mit den durch die Speichereinheit MEM vorgegebenen Werten überein, wird keine Weiterleitung detektiert und die mittels des Demodulators abgetrennten Daten werden in dem Signalprozessor verarbeitet.

Ein Vorteil des Verfahrens ist es, daß mittels der Bestimmung der jeweiligen Feldstärkevektoren aus der Abnahme der Feldstärke von den Sendeantennen ausgesendeten elektromagnetischen Feldern auf zuverlässige Weise eine unbefugte Verlängerung der Kommunikationsstrecke detektiert wird. Ferner läßt sich mittels den in dem Wertefeld abgelegten Wertepaaren die minimale und maximale Entfernung einer Kommunikation zwischen zwei Sendeund Empfangseinheiten vorgeben. Ferner läßt sich die Sicherheit gegenüber einer Weiterleitung erhöhen, indem die Feldstärke mehrfach innerhalb des Kommunikationszeitraumes bestimmt wird und oder von der ersten Sende- und Empfangseinheit mehr als zwei Sendeantennen verwendet werden. Ein weiterer Vorteil des Verfahrens ist es, daß mit einer einfachen ortsabhängigen Bestimmung der Feldstärke des elektromagnetischen Feldes um die jeweilige Sendeantenne sich für eine gegebene Sender- und Empfängeranordnung das Wertefeld erzeugen läßt, indem für jeden Raumpunkt die entsprechenden Wertetupel und die Empfangswinkel in dem Wertefeld abgelegt wird. Um die Zuverlässigkeit des Verfahrens bei dem Vergleich mit den ausgemessenen Werten und den vorgegebenen Werten zu erhöhen werden die jeweiligen Wertepaare und die Empfangswinkel mit einer zulässigen Streubreite versehen. Die Größe der Streubreite hängt hierbei von der Deformation der Feldverteilung und von den Systemstreuungen der Sender-Empfängeranordnung ab. Für ein Weiterleitungsgerät läßt sich die Sendecharakteristik mit einem vertretbaren Aufwand nicht nachbilden, selbst wenn bei einer Anwendung in einem Kraftfahrzeug die Entfernung der Sendeantennen im Bereich der zugelassenen Kommunikationsentfernung liegt. Ferner läßt sich das Verfahren sowohl bei einer unidirektionalen als auch bei einer bidirektionalen Kommunikation durchführen. Insbesondere läßt sich bei einer bidirektionalen Kommunikation die Bestimmung der Feldstärkevektoren in der ersten Sende- und Empfangseinheit durchführen, indem die einzelnen Komponenten des jeweiligen Feldstärkevektors an die erste Sende- und Empfangseinheit zurückgesendet wird. Hierbei läßt sich der Schaltungsaufwand in der zweiten Sende- und Empfangseinheit wesentlich reduzieren. Da sich die Bestimmung und Vergleich der Feldstärkewerte während der Datenauswertung innerhalb eines Authentifizierungsprozesses durchführen läßt, wird die Kommunikationszeit nur wenig erhöht.

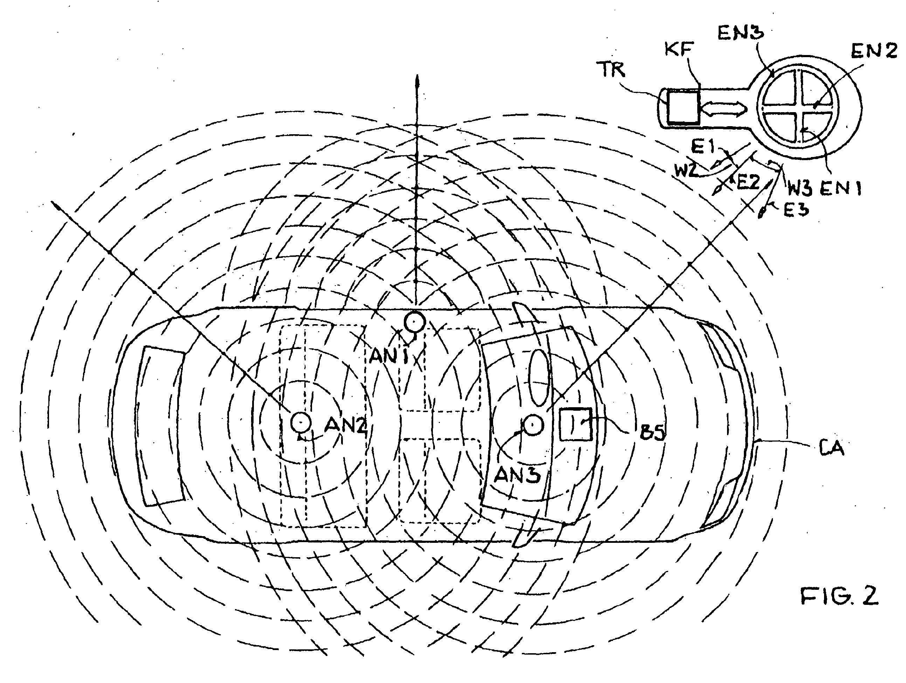

Bei dem in Figur 2 dargestellten Ausführungsbeispiel ist die erste Sende- und Empfangseinheit (nicht abgebildet) in einer Basiseinheit BS, die in einem Kraftfahrzeug CA eingebaut ist integriert. Ferner ist die zweite Sende- und Empfangseinheit (nicht abgebildet), in einem Transponder TR, der in einem Schlüssel KE eingebaut ist, integriert. Hierbei erfolgt die bidirektionale Datenübertragung im niederfrequenten Bereich bei 125 KHz mittels einer induktiven Kopplung in dem elektromagnetischen Nahfeld. Der Transponder TR weist drei Sende-Empfangsantennen EN1, EN2, und EN3 auf, wobei die beiden Stabantennen EN1 und EN2 in der Ebene der ringförmigen ausgebildeten Antennen EN3 angeordnet sind. Hierdurch sind alle drei zueinander orthogonal stehenden Antennen in einer Ebene angeordnet. Die Basiseinheit BS weist drei Sende- und Empfangsantenne AN1, AN2 und AN3 auf, mittels denen die Basiseinheit BS in sequentieller Reihenfolge das elektromagnetische Feld abstrahlt. Da sich die Sende- und Empfangsantennen EN1, EN2, EN3 des Transponders TR im Nahfeld um die Sendeantennen befinden, sind im wesentlichen die magnetischen Komponenten des elektromagnetischen Feldes wirksam, wobei im Allgemeinen der magnetische Feldverlauf proportional mit der Höhe der Permeabilität der Karosserie des Kraftfahrzeuges CA überformt wird und der Feldverlauf außerhalb des Kraftfahrzeuges CA von der Kugelform abweicht. In dem Transponder TR wird mittels den Sende- und Empfangsantennen EN1, EN2, und EN3 in sequentieller Reihenfolge die Komponenten der Feldstärkevektoren E1, E2, und E3 bestimmt, wobei beginnend mit der Aussendung des Feldes durch die erste Antenne AN1 die zugehörigen Komponenten des magnetischen Feldstärkevektors E1 bestimmt und nachfolgend von dem Transponder TR die einzelnen Komponenten an die Basisstation BS zurückgesendet werden. Nachfolgend wird dies für die Feldstärkevektoren E2 und E3 durchgeführt. Bei der Zurücksendung der Werte der einzelnen Komponenten werden von dem Transponder TR die Werte vorzugsweise in verschlüsselter Form als digitale Daten auf ein Antwortsignal aufmoduiiert. In der Basiseinheit BS werden aus Komponenten der jeweiligen Vektoren EN1, EN2 und EN3 die zugehörigen Betragswerte, sowie die Empfangswinkel W2 und W3 zwischen den Vektoren EN1 und EN2 bzw. den Vektoren EN2 und EN3 bestimmt und mit den Werten aus dem Wertefeld verglichen. Ferner ist es vorteilhaft, bei einer Übereinstimmung mittels eines Antwortsignals dem Transponder TR die Gültigkeit der ausgewerteten Daten mitzuteilen, um den Authentifizierungsprozeß zwischen Basiseinheit BS und Transponder TR fortzuführen.

Ein Vorteil des Verfahrens ist es, daß bei der bidirektionalen Datenübertragung die Bestimmung der Vektoren und der Vergleich mit den vorgegebenen Werten jeweils in der Basiseinheit durchführen und sich die Komplexität einer integrierten Schaltung in dem Transponder und damit den Stromverbrauch des Transponders verringern läßt.

## Patentansprüche

1. Verfahren zur Erkennung einer Weiterleitung bei einer kontaktlosen Datenübertragung zwischen einer ersten Sende- und Empfangseinheit (SE1) und einer zweiten wenigstens als Empfangseinheit ausgebildeten Einheit (SE2), bei dem von der ersten Sende- und Empfangseinheit (SE1) ein elektromagnetisches Feld mittels wenigstens zwei räumlich getrennten Antennen (SA1, SA2) ausgesendet wird,
**dadurch gekennzeichnet, daß**
• von der ersten Sende- und Empfangseinheit (SE1) zur Aussendung des elektromagnetischen Feldes die Antennen (SA1, SA2) in sequentieller Reihenfolge angesteuert werden, und
• von der zweiten Einheit (SE2) die Feldstärkewerte des empfangenen elektromagnetisches Feldes bestimmt werden, und
• die Feldstärkewerte der jeweiligen Antennen (SA1, SA2) mit vorgegebenen Werten aus einem zugeordneten Wertefeld verglichen werden, und
• eine Weiterleitung erkannt wird, sofern die Feldstärkewerte außerhalb eines durch das Wertefeld gegebenen Bereiches liegen.

2. Verfahren nach Anspruch 1, **dadurch gekennzeichnet, daß** das elektromagnetische Feld in der Einheit (SE2) mittels drei zueinander orthogonal stehenden Antennen (EA1, EA2, EA3) empfangen wird.

3. Verfahren nach Anspruch 2, **dadurch gekennzeichnet, daß** der Empfang des elektromagnetischen Feldes mittels zwei stabförmigen Antennen (EN1, EN2) die in der Ebene einer ringförmig ausgeformten Antenne (EN2) angeordnet sind, durchgeführt wird.

4. Verfahren nach einem der Ansprüche 1 bis 3, **dadurch gekennzeichnet, daß** zur Erkennung einer Weiterleitung die Beträge der Feldstärken verglichen werden.

5. Verfahren nach einem der Ansprüche 1 bis 4, **dadurch gekennzeichnet, daß** aus den Feldstärkewerten der Empfangswinkel (W1) zwischen den beiden Sendeantennen (SA1, SA2) bestimmt wird und mit einem vorgegebenen Winkel auf Übereinstimmung überprüft wird.

6. Verfahren nach einem der Ansprüche 1 bis 5, **dadurch gekennzeichnet, daß** die Ergebnisse der Wertevergleiche gespeichert werden.

7. Verfahren nach einem der Ansprüche 1 bis 6, **dadurch gekennzeichnet, daß** als Feldstärkewert der magnetische Anteil des elektromagnetischen Feldes bestimmt wird.

8. Verfahren nach einem der Ansprüche 1 bis 7, **dadurch gekennzeichnet, daß** der Wertevergleich zu Beginn der Datenübertragung durchgeführt wird.

9. Verfahren nach einem der Ansprüche 1 bis 8, **dadurch gekennzeichnet, daß** der Wertevergleich mehrfach während der Datenübertragung durchgeführt wird.

10. Verfahren nach einem der Ansprüche 1 bis 9, **dadurch gekennzeichnet, daß** auf das elektromagnetischen Feld vorzugsweise mittels einer Phasen- oder Frequenzmodulation Daten aufmoduliert werden.

11. Verfahren nach einem der Ansprüche 1 bis 10, **dadurch gekennzeichnet, daß** der Wertevergleich in der zweiten Einheit (SE2) durchgeführt wird.

12. Verfahren nach Anspruch 11, **dadurch gekennzeichnet, daß** das Ergebnis des Wertevergleichs von der zweiten als Sende- und Empfangseinheit ausgebildeten Einheit (SE2) an die erste Sende- und Empfangseinheit (SE1) übermittelt wird.

13. Verfahren nach Anspruch 12, **dadurch gekennzeichnet, daß** die zweite Einheit (SE2) die Feldstärkewerte an die erste Sende- und Empfangseinheit (SE1) zurücksendet und der Wertevergleich in der ersten Sende- und Empfangseinheit (SE1) durchgeführt wird.

## Claims

1. Method for recognition of onward transmission in a contactless data transmission between a first transmitting and receiving unit (SE1) and a second unit (SE2) constructed at least as a receiving unit, in which an electromagnetic field is transmitted by the first transmitting and receiving unit (SE1) by means of at least two spatially separate antennae (SA1, SA2), **characterised in that**
- the antennae (SA1, SA2) are controlled in drive in sequential succession by the first transmitting and receiving unit (SE1) for transmission of the electromagnetic field,
- the field strength values of the received electromagnetic field are determined by the second unit (SE2),
- the field strength values of the respective antennae (SA1, SA2) are compared with predetermined values from an associated values field and
- an onward transmission is recognised insofar as the field strength values lie outside a range given by the values field.

2. Method according to claim 1, **characterised in that** the electromagnetic field is received in the unit (SE2) by means of three mutually orthogonal antennae (EA1, EA2, EA3).

3. Method according to claim 2, **characterised in that** the reception of the electromagnetic field is performed by means of two rod-shaped antennae (EN1, EN2) arranged in the plane of an annularly formed antenna (EN2).

4. Method according to any one of claims 1 to 3, **characterised in that** the amounts of the field strengths are compared for recognition of an onward transmission.

5. Method according to any one of claims 1 to 4, **characterised in that** the reception angle (W1) between the two transmission antennae (SA1, SA2) is determined from the field strength values and is checked with a predetermined angle for agreement.

6. Method according to any one of claims 1 to 5, **characterised in that** the results of the values comparisons are stored.

7. Method according to any one of claims 1 to 6, **characterised in that** the magnetic component of the electromagnetic field is determined as field strength value.

8. Method according to any one of claims 1 to 7, **characterised in that** the values comparison is performed at the beginning of the data transmission.

9. Method according to any one of claims 1 to 8, **characterised in that** the values comparison is performed several times during the data transmission.

10. Method according to any one of claims 1 to 9, **characterised in that** data are modulated on the electromagnetic field preferably by means of a phase or frequency modulation.

11. Method according to any one of claims 1 to 10, **characterised in that** the values comparison is performed in the second unit (SE2).

12. Method according to claim 11, **characterised in that** the result of the values comparison is communicated by the second unit (SE2), which is constructed as transmitting and receiving unit, to the first transmitting and receiving unit (SE1).

13. Method according to claim 12, **characterised in that** the second unit (SE2) transmits the field strength values back to the first transmitting and receiving unit (SE1) and the values comparison is performed in the first transmitting and receiving unit (SE1).

## Revendications

1. Procédé de reconnaissance d'un transfert dans une transmission de données sans contact entre une première unité d'émission-réception (SE1) et une deuxième unité (SE2) au moins conçue comme unité de réception, dans lequel un champ magnétique est émis à partir de la première unité d'émission-réception (SE1) au moyen d'au moins deux antennes (SA1, SA2) spatialement séparées,
**caractérisé en ce que** :
. pour l'émission du champ électromagnétique, les antennes (SA1, SA2) sont commandées en ordre séquentiel par la première unité d'émission-réception (SE1), et
. les valeurs d'intensité de champ du champ électromagnétique reçu sont déterminées par la deuxième unité (SE2), et
. les valeurs d'intensité de champ de chacune des antennes (SA1, SA2) sont comparées à des valeurs prédéterminées d'un champ de valeurs qui y est associé, et
. un transfert est reconnu tant que les valeurs d'intensité de champ sont situées en-dehors d'une zone définie par le champ de valeurs.

2. Procédé selon la revendication 1, **caractérisé en ce que** le champ électromagnétique est reçu dans l'unité (SE2) au moyen de trois antennes (EA1, EA2, EA3) disposées de manière orthogonale l'une par rapport aux autres.

3. Procédé selon la revendication 2, **caractérisé en ce que** la réception du champ électromagnétique s'effectue au moyen de deux antennes (EN1, EN2) en forme de barreau disposées dans le plan d'une antenne (EN3) conformée en anneau.

4. Procédé selon l'une quelconque des revendications 1 à 3, **caractérisé en ce que** pour la reconnaissance d'un transfert on compare les valeurs des intensités de champ.

5. Procédé selon l'une quelconque des revendications 1 à 4, **caractérisé en ce qu'**à partir des valeurs d'intensité de champ on détermine l'angle de réception (W1) entre les deux antennes émettrices (SA1, SA2), et **en ce qu'**on vérifie sa concordance avec un angle prédéterminé.

6. Procédé selon l'une quelconque des revendications 1 à 5, **caractérisé en ce que** les résultats des comparaisons de valeurs sont mémorisés.

7. Procédé selon l'une quelconque des revendications 1 à 6, **caractérisé en ce que** l'on détermine comme valeur d'intensité de champ la partie magnétique du champ électromagnétique.

8. Procédé selon l'une quelconque des revendications 1 à 7, **caractérisé en ce que** l'on effectue la comparaison des valeurs au début de la transmission de données.

9. Procédé selon l'une quelconque des revendications 1 à 8, **caractérisé en ce que** l'on effectue la comparaison des valeurs à plusieurs reprises durant la transmission de données.

10. Procédé selon l'une quelconque des revendications 1 à 9, **caractérisé en ce que** l'on module des données sur le champ électromagnétique, de préférence au moyen d'une modulation de phase ou de fréquence.

11. Procédé selon l'une quelconque des revendications 1 à 10, **caractérisé en ce que** la comparaison des valeurs est effectuée dans la deuxième unité (SE2).

12. Procédé selon la revendication 11, **caractérisé en ce que** le résultat de la comparaison des valeurs est transmis par la deuxième unité (SE2) conçue comme unité d'émission-réception à la première unité d'émission-réception (SE1).

13. Procédé selon la revendication 12, **caractérisé en ce que** la deuxième unité (SE2) renvoie les valeurs d'intensité de champ à la première unité d'émission-réception (SE1) et **en ce que** la comparaison des valeurs est effectuée dans la première unité d'émission-réception (SE1).
